# EUROPEAN PATENT SPECIFICATION

(11) **EP 1 747 951 B1**
(45) Date of publication and mention of the grant of the patent: **30.07.2008**
(21) Application number: 06011233.1
(22) Date of filing: 31.05.2006
(51) Int. Cl.: B60R 21/233

(54) **Airbag and airbag apparatus**
Gassack und Gassackeinrichtung
Coussin gonflable et son système

(30) Priority: 29.07.2005 JP 2005221246; 31.01.2006 JP 2006022934
(43) Date of publication of application: 31.01.2007
(73) Proprietor: TAKATA CORPORATION, Minato-ku, Tokyo 106-8510 (JP)
(72) Inventor: Abe, Kazuhiro, Minato-ku Tokyo 106-8510 (JP)
(74) Representative: Bertsch, Florian Oliver

(56) References cited:
- EP-A- 1 442 944
- EP-A1- 1 279 566
- EP-A1- 1 318 052
- EP-A2- 1 044 855
- US-A1- 2004 026 912

## Description

The present invention relates to an airbag mounted to high-speed movable units such as vehicles, for restraining human bodies by inflating in an emergency such as a crash.

### Background Art

Various airbag apparatuses such as driver airbag apparatuses have been used to protect occupants in case of emergency such as a car crash. Driver airbag apparatuses include an airbag formed by sewing the peripheries of a front panel adjacent to the occupant and an opposite rear panel together. The rear panel has an inflator-engaging opening for receiving the end of an inflator in the center. The periphery of the opening is fixed to a retainer with bolts, pins, or rivets. The rear panel also has a vent hole for releasing gas in the airbag to absorb the impact when a driver strikes against the airbag.

It is described in Japanese Unexamined Patent Application Publication No. 1-311930 to provide an airbag having an inner panel (referred to as an inner airbag in this reference) between the inflator opening of the rear panel and the front panel to partition the interior of the airbag into a central first chamber and a peripheral second chamber. The inner airbag has a communication hole for connecting the first chamber and the second chamber with each other. Upon activation of the inflator, the first chamber inflates first and then the second chamber inflates.

An airbag according to the preambles of claims 1 and 3 to 6 is known from EP-A-1 442 944.

### Problems to be Solved by the Invention

It is an object of the present invention to provide an airbag and an airbag apparatus whose interior is divided into a first chamber and a second chamber, in which when an occupant strikes against the airbag, the periphery of the airbag is prevented or restrained from expanding laterally outward.

### Means for Solving the Problems

According to the invention, this object is achieved by an airbag as defined in claim 1, 3, 4, 5, or 6 and an airbag apparatus as defined in claim 7. The dependent claim defines a preferred and advantageous embodiment of the invention.

According to the invention, an airbag inflated with gas from a gas generator is provided, wherein the airbag includes: a front panel disposed on the occupant side and a rear panel disposed opposite to the occupant, the peripheries of the front panel and the rear panel being connected with each other, the rear panel having an opening for the gas generator in the center; and an inner panel for partitioning the interior of the airbag into a central first chamber and a second chamber enclosing the first chamber, the inner panel having a communication portion by which the first chamber communicates with the second chamber, the gas from the gas generator flowing from the first chamber through the communication portion into the second chamber. The inner panel includes a first inner panel adjacent to the front panel and a second inner panel adjacent to the rear panel. The rear end of the first inner panel is connected to the front end of the second inner panel. A tether belt extending integrally from at least one of the first inner panel and the second inner panel is connected to the side periphery of the airbag.

Because the tether belt is integrated with the first or second inner panel, the airbag can be manufactured easily with few sewing processes.

The tether belt may extend from the first inner panel and may extend through the first chamber and the communicating portion to the opposite second chamber, with the first chamber therebetween.

When an occupant strikes against the airbag to apply an external force to the airbag so as to squash the first and second chambers, the base end of the tether belt connecting to the first inner panel and the distal end of the tether belt connecting to the side periphery of the airbag are drawn in separating directions. Therefore, the outward expansion of the side periphery of the airbag can be sufficiently prevented or restrained.

According to the invention, an airbag inflated with gas from a gas generator is provided, wherein the airbag includes: a front panel disposed on the occupant side and a rear panel disposed opposite to the occupant, the peripheries of the front panel and the rear panel being connected with each other, the rear panel having an opening for the gas generator in the center; and an inner panel for partitioning the interior of the airbag into a central first chamber and a second chamber enclosing the first chamber, the inner panel having a communication portion by which the first chamber communicates with the second chamber, the gas from the gas generator flowing from the first chamber through the communication portion into the second chamber. A tether belt extending from one side peripheral portion of the airbag through the communicating portion to the other side peripheral portion, both ends of the tether belt are connected to the side peripheral portions of the airbag.

In this case, a tether belt crosses the airbag from one side peripheral portion to the other side peripheral portion. Accordingly, when an occupant strikes against the inflated airbag, an end of the tether belt and the other end are drawn in separating directions. Therefore, the outward expansion of the side periphery of the airbag can be sufficiently prevented or restrained.

According to the invention, an airbag inflated with gas from a gas generator is provided, wherein the airbag includes: a front panel disposed on the occupant side and a rear panel disposed opposite to the occupant, the peripheries of the front panel and the rear panel being connected with each other, the rear panel having an opening for the gas generator in the center; and an inner panel for partitioning the interior of the airbag into a central first chamber and a second chamber enclosing the first chamber, the inner panel having a communication portion by which the first chamber communicates with the second chamber, the gas from the gas generator flowing from the first chamber through the communication portion into the second chamber; wherein a tether belt extending from at least one of the front panel and the rear panel is connected to the inner panel.

Because the tether belt is integrated with the front panel or the rear panel of the airbag, it can be manufactured easily with few sewing processes.

According to the invention, an airbag inflated with gas from a gas generator is provided, wherein the airbag includes: a front panel disposed on the occupant side and a rear panel disposed opposite to the occupant, the peripheries of the front panel and the rear panel being connected with each other, the rear panel having an opening for the gas generator in the center; and an inner panel for partitioning the interior of the airbag into a central first chamber and a second chamber enclosing the first chamber, the inner panel having a communication portion by which the first chamber communicates with the second chamber, the gas from the gas generator flowing from the first chamber through the communication portion into the second chamber. The inner panel includes a first inner panel on the front panel side and a second inner panel on the rear panel side. The rear end of the first inner panel is connected to the front end of the second inner panel. A connecting piece extending at least one of the first inner panel and the second inner panel and a connecting piece extending from at least one of the front panel and the rear panel are connected to each other.

A connecting piece extending from the first inner panel or the second inner panel and a connecting piece extending from the front panel or the rear panel are joined to thereby connect the inner panel and the side periphery of the airbag. The connecting pieces are integrated with the first inner panel or the second inner panel, or the front panel or the rear panel, respectively, so the airbag can be manufactured easily with few sewing processes.

According to the invention, an airbag inflated with gas from a gas generator is provided, wherein the airbag includes: a front panel disposed on the occupant side and a rear panel disposed opposite to the occupant, the peripheries of the front panel and the rear panel being connected with each other, the rear panel having an opening for the gas generator in the center; and an inner panel for partitioning the interior of the airbag into a central first chamber and a second chamber enclosing the first chamber, the inner panel having a communication portion by which the first chamber communicates with the second chamber, the gas from the gas generator flowing from the first chamber through the communication portion into the second chamber. The inner panel and the side periphery of the airbag are connected with a tether belt which is not part of the inner panel, the front panel, or the rear panel.

The inner panel and the side periphery of the airbag are connected with a tether belt separate from (is not part of) the inner panel, the front panel, and the rear panel. The airbag thus has a high degree of flexibility in arranging the tether belt.

According to the invention, an airbag apparatus including an airbag and a gas generator is characterized in that the airbag is one of the airbags described above.

In the case of the airbag and the airbag apparatus according to the invention, a tether belt is connected to the side periphery of the airbag. Accordingly, when an occupant strikes against the inflated airbag, outward expansion of the airbag can be prevented or restrained.

### Brief Description of the Drawings

Fig. 1 is a cross sectional view of an airbag and an airbag apparatus according to an embodiment of the present invention.
Fig. 2 is an exploded perspective view of the airbag and the airbag apparatus of Fig. 1.
Fig. 3 is a cross sectional view of an airbag and an airbag apparatus according to another embodiment.
Fig. 4 is an exploded perspective view of the airbag and the airbag apparatus of Fig. 3.
Fig. 5 is a cross sectional view of an airbag and an airbag apparatus according to another embodiment.
Fig. 6 is an exploded perspective view of the airbag and the airbag apparatus of Fig. 5.
Fig. 7 is an exploded perspective view of the essential part of the airbag of Fig. 5.
Fig. 8 is a horizontal cross sectional view of the airbag of Fig. 5.
Fig. 9 is a horizontal cross sectional view of an airbag apparatus according to another embodiment.
Fig. 10 is a plan view of a front panel and a first inner panel of the airbag in Fig. 1.
Fig. 11 is a cross sectional view of an airbag and an airbag apparatus according to another embodiment.
Fig. 12 is an exploded perspective view of the airbag and the airbag apparatus of Fig. 11.
Fig. 13 is a cross sectional view of an airbag and an airbag apparatus according to another embodiment.
Fig. 14 is a cross sectional view of an airbag and an airbag apparatus according to another embodiment.

### Best Mode for Carrying Out the Invention

Embodiments of the present invention will be described hereinbelow with reference to the drawings.

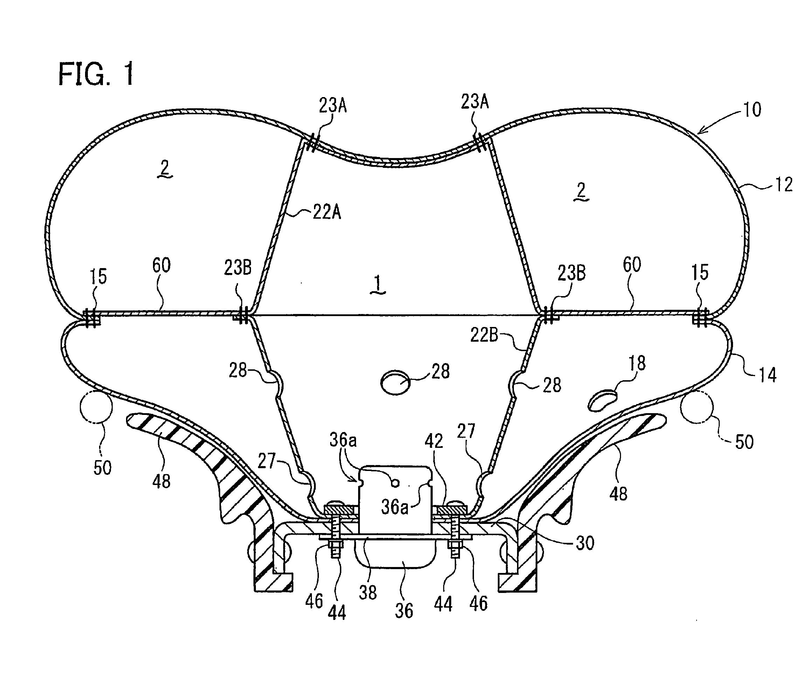

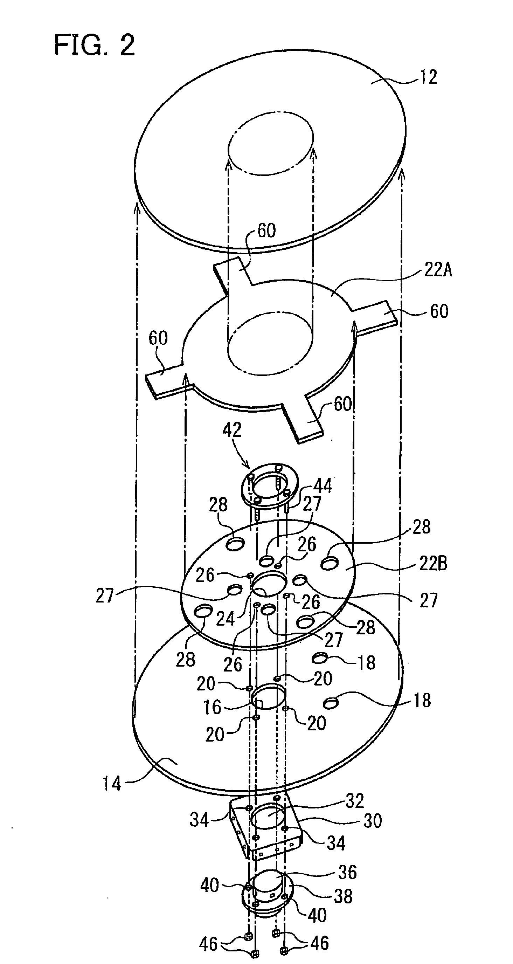

Fig. 1 is a cross sectional view of an automotive driver airbag and airbag apparatus according to an embodiment of the invention. Fig. 2 is an exploded perspective view of the airbag and the airbag apparatus.

The airbag 10 includes a front panel 12, a rear panel 14, a first inner panel 22A, and a second inner panel 22B, which are each made of a circular woven fabric. The front panel 12 and the rear panel 14 have an equal diameter, whose outer peripheries are sewn together into a bag shape with a seam 15 such as thread. The sewn portion has a ring shape along the outer peripheries of the front panel 12 and the rear panel 14.

The rear panel 14 has an inflator (gas generator) opening 16 and vent holes 18. The inflator opening 16 is disposed in the center of the rear panel 14. Around the inflator opening 16, bolt-insertion holes 20 are provided.

The airbag 10 has the first inner panel 22A and the second inner panel 22B therein. The first and second inner panel 22A and 22B are centered at a point substantially identical to the front panel 12 and the rear panel 14, whose outer peripheries are stitched together with a seam 23B such as thread. The center of the first inner panel 22A adjacent to the front panel 12 (the end of the first inner panel 22A with the airbag 10 in an inflated state) is sewn to the center of the front panel 12 with a seam 23A such as thread.

The center of the second inner panel 22B adjacent to the rear panel 14 (the rear end of the second inner panel 22B with the airbag 10 in an inflated state) has an inflator opening 24 centered at a point identical to the inflator opening 16 of the rear panel 14. The openings 16 and 24 have substantially an equal diameter. Around the opening 24 of the second inner panel 22B, bolt-insertion holes 26, which overlap with the bolt-insertion holes 20 of the rear panel 14, are provided.

The periphery of the inflator opening 24 of the second inner panel is superposed on the periphery of the inflator opening 16 of the rear panel 14 and the periphery of an inflator-mounting opening 32 of a retainer 30. The peripheries of the inflator openings 24 and 16 are fixed to the retainer 30 through the bolt-insertion holes 26 and 20. Thus the periphery of the inflator opening 24 of the second inner panel 22B connects to the periphery of the inflator opening 16 of the rear panel 14; the outer peripheries of the first and second inner panels 22A and 22B connect with each other; and the inner periphery of the first inner panel 22A connects with the front panel 12.

The first and second inner panels 22A and 22B partition the interior of the airbag 10 into a central first chamber 1 and a second chamber 2 around the first chamber 1. The first chamber 1 is inside the inner panels 22A and 22B.

The second inner panel 22B has communication holes 27 and 28 as a communication portion for communicating the first chamber 1 and the second chamber 2 with each other. In this embodiment, the communication holes 28 are disposed relatively close to the outer periphery of the second inner panel 22B; and the communication holes 27 are disposed closer to the inner periphery (adjacent to the inflator opening 24). The first inner panel 22A may also have communication holes.

In this embodiment, the communication holes 27 are provided on the extension of the gas blowing direction of an inflator 36, to be described later, which is disposed in the first chamber 1 through the inflator openings 16 and 24, or at the position facing gas ports 36a of the inflator 36.

As shown in Fig. 2, this embodiment includes four communication holes 27 and 28 at regular intervals around the circumference of the airbag 10. The communication holes 27 and 28 are circumferentially out of phase relative to the center of the airbag 10. The number and arrangement of the communication holes 27 and 28 are not limited to that.

Reinforcing patches or the like may be fixed to the peripheries of the openings 16 and 24, the communication holes 27 and 28, and the vent holes 18.

The inner panels 22A and 22B and the periphery of the airbag 10 (the outer peripheries of the front panel 12 and the rear panel 14) are joined together with a tether belt 60 that is provided across the second chamber 2. The tether belt 60 of this embodiment is integrated with the first inner panel 22A, and extends laterally (radially) from the periphery in a state in which the first inner panel 22A is flattened.

As shown in Fig. 2, four tether belts 60 are provided in this embodiment. The tether belts 60 extend radially at substantially regular intervals around the periphery of the first inner panel 22A. The number and arrangement of the tether belts 60 are not limited to that. The tether belts 60 may be integrated with the second inner panel 22B, or alternatively, may extend integrally from the first and second inner panels 22A and 22B.

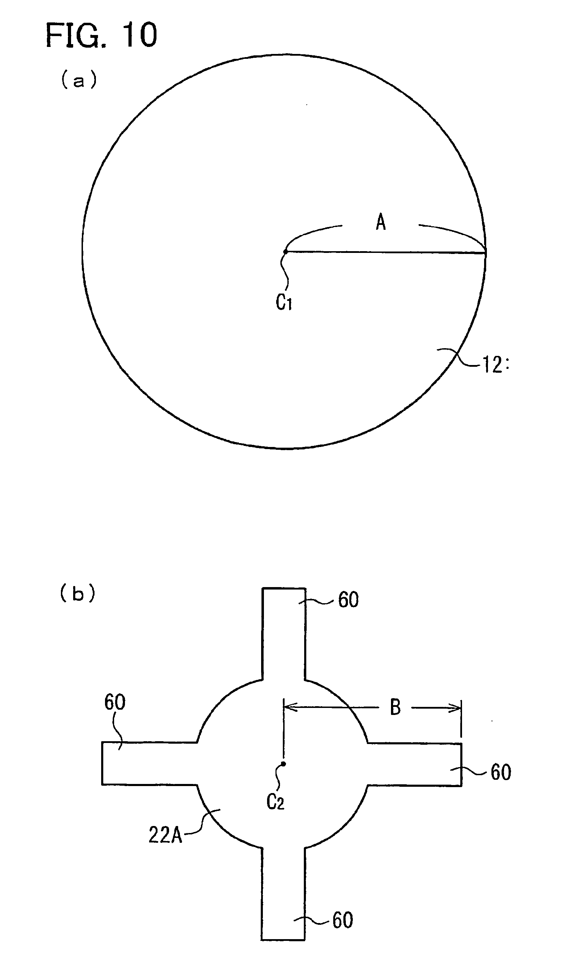

As shown in Fig. 10, the distance B from the center C₂ of the first inner panel 22A to the end of each tether belt 60 is smaller than the radius A of the front panel 12 (or the distance from the center C₁ of the front panel 12 to the seam 15 at which the peripheries of the front panel 12 and the rear panel 14 are joined), with the front panel 12 and the first inner panel 22A respectively being extended flat.

Accordingly, when the airbag 10 inflates, the side periphery of the airbag 10 is drawn to the center of the airbag 10 by the first inner panel 22A and the tether belts 60, so that the sidewise expansion of the airbag 10 becomes smaller than that when the side peripheries are free.

In this embodiment, the ends of the tether belts 60 are placed on the sewing portions of the peripheries of the front panel 12 and the rear panel 14, and stitched together with a common seam 15. The method of joining the ends of the tether belts 60 with the periphery of the airbag 10 is not limited to that; for example, ear-like projections may be provided around the periphery of the front panel 12 and/or the rear panel 14, to which the ends of the tether belts 60 may be sewn, or alternatively, the tether belts 60 may be sewn directly to the inner surface around the periphery of the front panel 12 or the rear panel 14.

The tether belts 60 are disposed so as to extend in the direction of the radius of the airbag 10 when the airbag 10 inflates, and connect the portions of the inner panels 22A and 22B and the portions of the front panel 12 and the rear panel 14 which are located in the same direction relative to the center of the airbag 10 (the respective centers C₁ and C₂ of the panels 12 and 22A) (opposing portions in the direction of the radius of the airbag 10). This structure prevents the twisting or traction or the like of the tether belts 60 themselves, the inner panels 22A and 22B, the front panel 12, or the rear panel 14 when the airbag 10 inflates to cause the tension of the tether belt 60.

The retainer 30 for mounting the airbag 10 has an inflator-mounting opening 32 in the center, around which bolt-insertion holes 34 are provided.

The inflator 36 is substantially cylindrical in shape and has the gas ports 36a around the side circumference at the axial end. This embodiment includes four gas ports 36a at regular intervals around the circumferential of the inflator 36. The inflator 36 ejects gas radially through the gas ports 36a. A flange 38 for fixing the inflator 36 projects from the side circumference of the axial middle of the inflator 36 (close to the rear end relative to the gas ports 36a). The flange 38 has bolt-insertion holes 40. The end of the inflator 36 is fitted in the inflator-mounting opening 32 of the retainer 30.

In mounting the airbag 10 to the retainer 30, the peripheries of the respective inflator openings 16 and 24 of the rear panel 14 and the second inner panel 22B are retained to the periphery of the inflator-mounting opening 32 of the retainer 30 with a retaining ring 42. The end of the inflator 36 fitted in the inflator-mounting opening 32 is inserted into the first chamber 1 through the inflator openings 16 and 24. The gas ports 36a at the end of the inflator 36 face the communication holes 27 of the second inner panel 22B.

At that time, stud bolts 44 of the retaining ring 42 are inserted into the bolt-insertion holes 26, 20, 34, and 40, to the ends of which nuts 46 are fastened, so that the second inner panel 22B, the airbag 10, and the inflator 36 are fixed to the retainer 30. The airbag 10 is then folded. A module cover 48 is fixed to the retainer 30 such that it covers the folded body of the airbag 10. Thus the airbag apparatus is constructed. The airbag apparatus is mounted to an automotive steering wheel 50.

The operation of this airbag apparatus is as follows:
In a car crash and the like, the inflator 36 is activated to eject gas into the first chamber 1 of the airbag 10. The gas then flows into the second chamber 2 through the communication holes 27 and 28 to thereby inflate the airbag 10. The airbag 10 opens the module cover 48 to deploy in the vehicle cabin, thereby restraining the driver.

According to the embodiment, the communication holes 27 are disposed on the extension of the gas blowing direction of the inflator 36 disposed in the first chamber 1 so as to face the gas ports 36a of the inflator 36. Accordingly, upon activation of the inflator 36, gas is ejected from the gas ports 36a toward the communication holes 27. Thus, the gas from the inflator 36 is also supplied directly to the second chamber 2 through the communication holes 27. Accordingly, the whole airbag 10 inflates quickly.

The side periphery of the airbag 10 is connected to the inner panels 22A and 22B in the center of the airbag 10 with the tether belts 60. This prevents the airbag 10 from expanding laterally outward when the occupant strikes against the inflated airbag 10.

Since the tether belts 60 are integrated with the first inner panel 22A, the airbag 10 needs sewing processes fewer than that using separate tethers and as such, it is easy to manufacture.

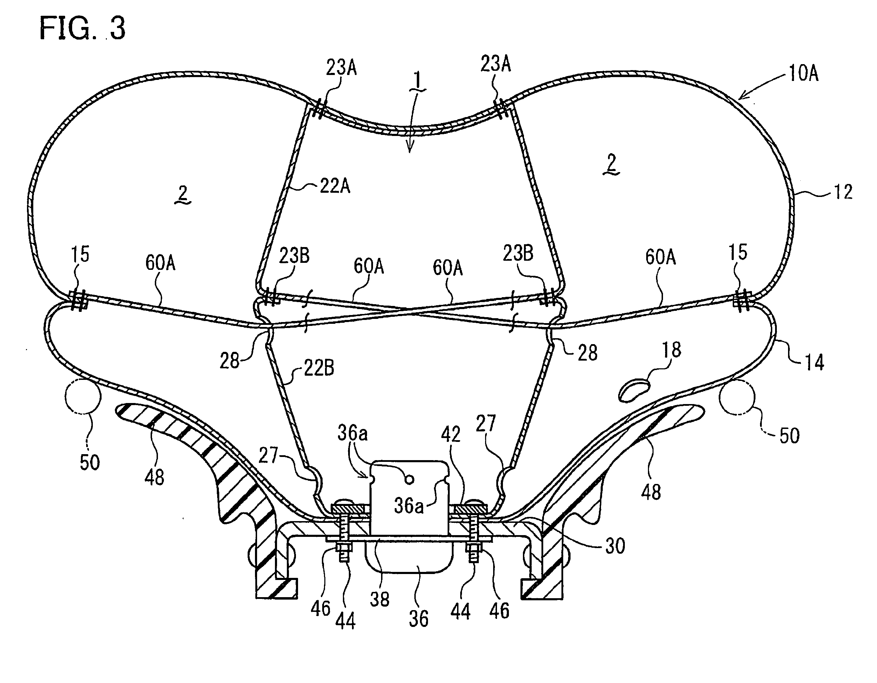

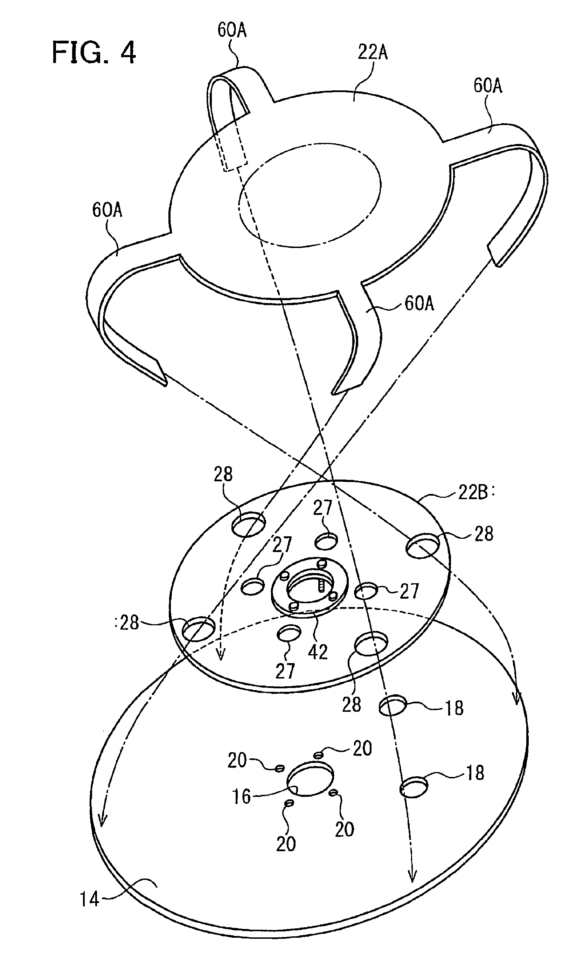

Fig. 3 is a cross-sectional view of an airbag and an airbag apparatus according to another embodiment. Fig. 4 is an exploded perspective view of first and second inner panels, a rear panel, and tether belts of the airbag.

In the case of the airbag 10A according to the embodiment, tether belts 60A extend from the first inner panel 22A into the first chamber 1, cross the interior of the first chamber 1, through the communication holes 28 located opposite to the base end of the tether belts 60A, and into the second chamber 2. The end of each tether belt 60A connects to the portion of the side periphery of the airbag 10A opposite to the base end of the tether belt 60A with the first chamber 1 therebetween.

The tether belts 60A of this embodiment are also integrated with the first inner panel 22A, and extend laterally (radially) from the periphery in a state in which the first inner panel 22A is flattened. In stitching up the peripheries of the first inner panel 22A and the second inner panel 22B, the portions to be stitched are disposed inside the first chamber 1 (e.g., the first and second inner panels 22A and 22B are placed one on another such that the surfaces facing the respective second chambers 2 are opposed to each other, and their peripheries are sewn flat, and then they are reversed inside out through the inflator opening 24 or the like), as shown in Fig. 3, so that the tether belts 60A extend into the first chamber 1.

According to the embodiment, the four tether belts 60A are disposed at regular intervals around the periphery of the first inner panel 22A, and extend from the periphery so as to cross one another in the center of the first chamber 1. The second inner panel 22B has communication holes 28 for the tether belts 60A to pass through, at the positions opposite to the base ends of the tether belts 60A or in the vicinity thereof, with the center of the first chamber 1 therebetween.

The number and arrangement of the tether belts 60A are not limited to that. The tether belts 60A may be integrated with the second inner panel 22B, or alternatively, may extend integrally from the first and second inner panels 22A and 22B. The number and arrangement of the communication holes 28 are also not limited to that. For example, there may be a communication hole 28 through which the tether belt 60A is not passed. As shown in the drawing, although the communication holes 28 of this embodiment are disposed in the second inner panel 22B, they may be provided in the first inner panel 22A.

Also in this embodiment, the ends of the tether belt 60A are placed on the stitched peripheries of the front panel 12 and the rear panel 14, and stitched with them with the common seam 15. The method of connecting the ends of the tether belts 60A with the periphery of the airbag 10A is not limited to that.

The other structure of the airbag 10A and an airbag apparatus equipped with the airbag 10A are the same as those of the embodiment shown in Figs. 1 and 2. The numerals in Figs. 3 and 4 the same as those of Figs. 1 and 2 indicate the same components.

With the airbag 10A, the tether belts 60A cross the first chamber 1, through the communication holes 28, and to the opposing second chamber 2 with the first chamber 1 therebetween. Accordingly, when an occupant strikes against the inflated airbag 10A to apply an external force to the airbag 10A so as to squash the first and second chambers 1 and 2, the base ends of the tether belts 60A connecting to the first inner panel 22A and the distal end of the tether belts 60A connecting to the side periphery of the airbag 10A are drawn in opposite directions. This sufficiently prevents the side periphery of the airbag 10A from expanding laterally outward.

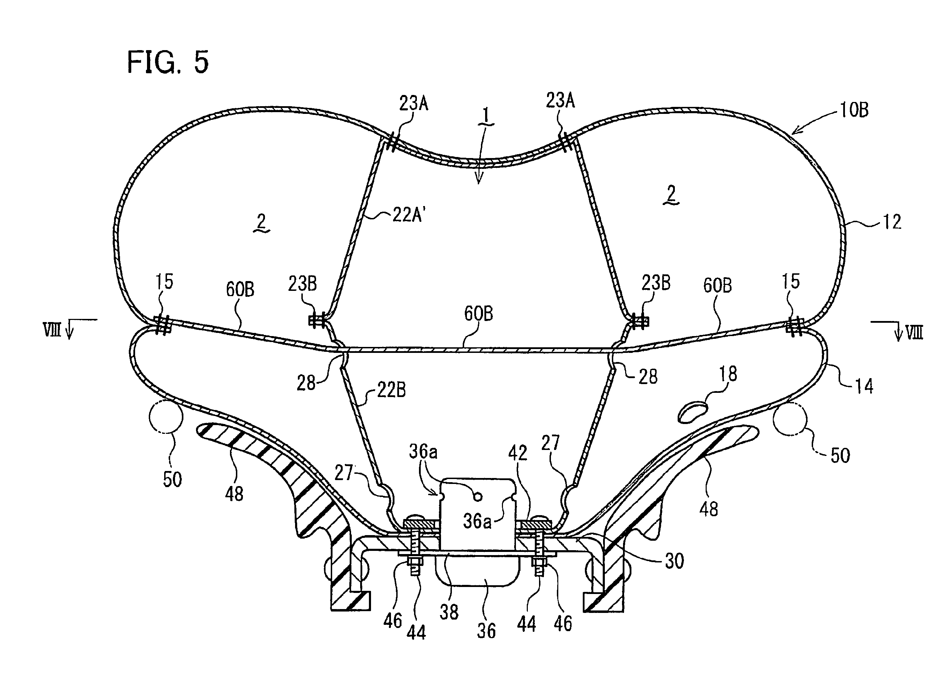

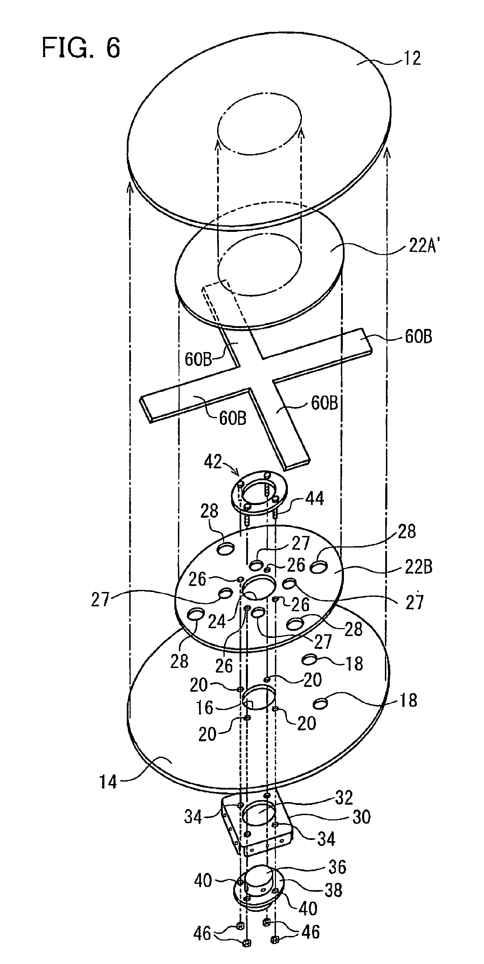

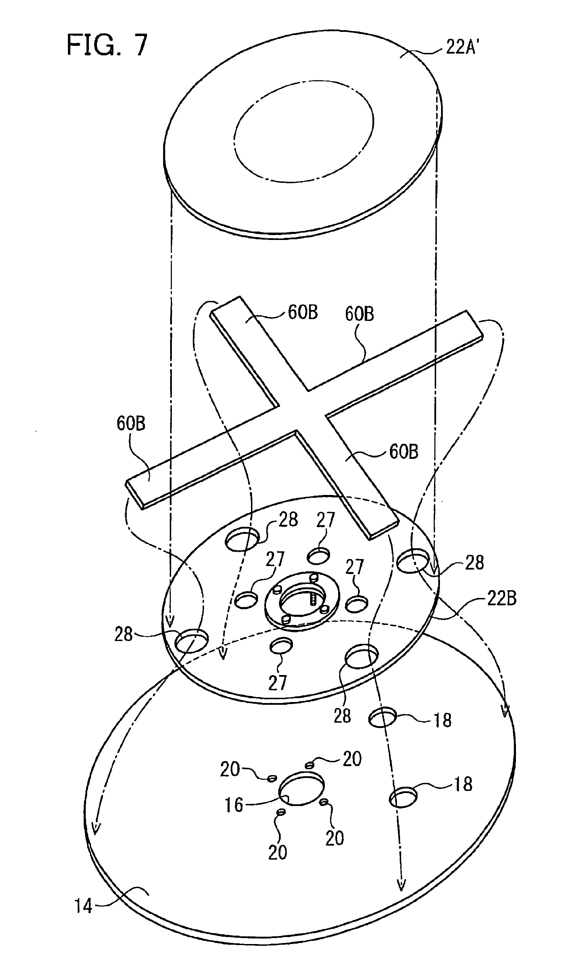

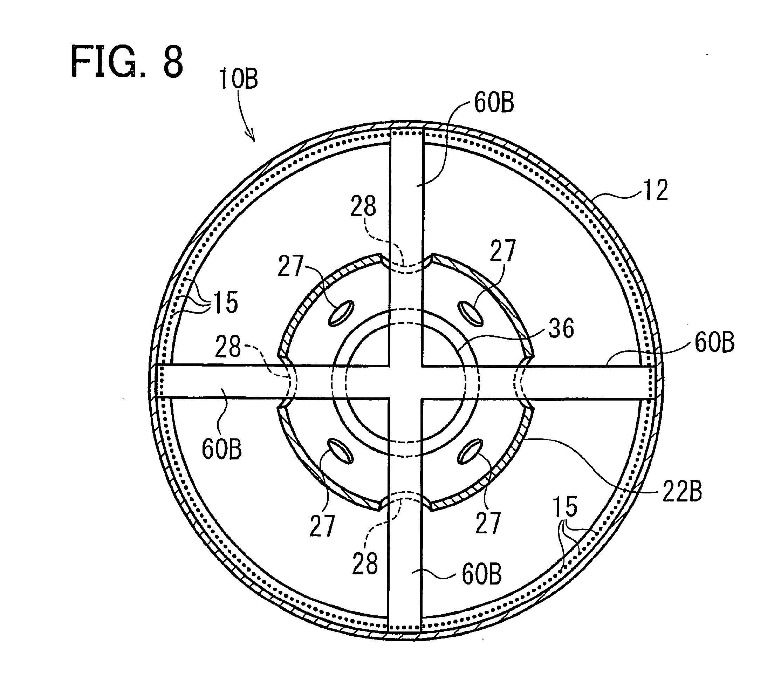

Fig. 5 is a cross sectional view of an airbag and an airbag apparatus according to another embodiment. Fig. 6 is an exploded perspective view of the airbag and the airbag apparatus. Fig. 7 is an exploded perspective view (en enlarged view of Fig. 6) of first and second inner panels, a rear panel, and tether belts. Fig. 8 is a horizontal cross section taken along line VIII-VIII of Fig. 5.

The airbag 10B of this embodiment has a structure in which tether belts 60B separate from inner panels 22A' and 22B cross the airbag 10B radially. The first inner panel 22A' of this embodiment has the same structure as that of the embodiment in Figs. 1 and 2 except that the tether belt 60 is eliminated from the first inner panel 22A.

As shown in Fig. 8, the tether belts 60B of this embodiment cross the airbag 10B vertically and laterally to intersect in the center of the airbag 10B, into the shape of a cross (four-way shape) (hereinafter, the belt of the tether belt 60B extending vertically in Fig. 8 is sometimes referred to as a vertical belt; the belt extending laterally is sometimes referred to as a lateral belt).

The second inner panel 22B of this embodiment has a pair of communication holes 28, 28 in vertically opposed positions in Fig. 8, and another pair of communication holes 28 in laterally opposed positions in Fig. 8. The vertical belt of the tether belts 60B passes through the vertically opposed communication holes 28, 28 to cross the airbag 10B (the first and second chambers 1 and 2) vertically in the drawing; the lateral belt passes through the laterally opposed communication holes 28, 28 to cross the airbag 10B laterally in the drawing.

The vertical belt of the tether belts 60B connects the vertically opposed portions in Fig. 8 of the side periphery of the airbag 10B; the lateral belt connects the laterally opposed portions in Fig. 8 of the side periphery of the airbag 10B.

Also in this embodiment, the number and arrangement of the communication holes 28 are not limited to that. For example, there may be a communication hole 28 through which the tether belt 60B is not passed. While the communication holes 28 are disposed in the second inner panel 22B, they may be disposed in the first inner panel 22A'.

Also in this embodiment, the ends of the vertical belt and the horizontal belt of the tether belts 60B are placed on the sewn portions of the peripheries of the front panel 12 and the rear panel 14, and stitched with them with the common seam 15. The method of connecting the ends of the tether belts 60B with the periphery of the airbag 10B is not limited to that.

The other structure of the airbag 10B and an airbag apparatus equipped with the airbag 10B are the same as those of the embodiment shown in Fig. 1 and 2. The numerals in Figs. 5 to 8 the same as those of Figs. 1 and 2 indicate the same components.

With the airbag 10B, the vertical belt and the lateral belt of the tether belts 60B cross the airbag 10B across the diameter. Accordingly, when an occupant strikes against the inflated airbag 10B, the tether belts 60B restrain the separation of the radially opposed side peripheral portions of the airbag 10B, thereby sufficiently preventing the radially ourward expansion of the side periphery of the airbag 10B.

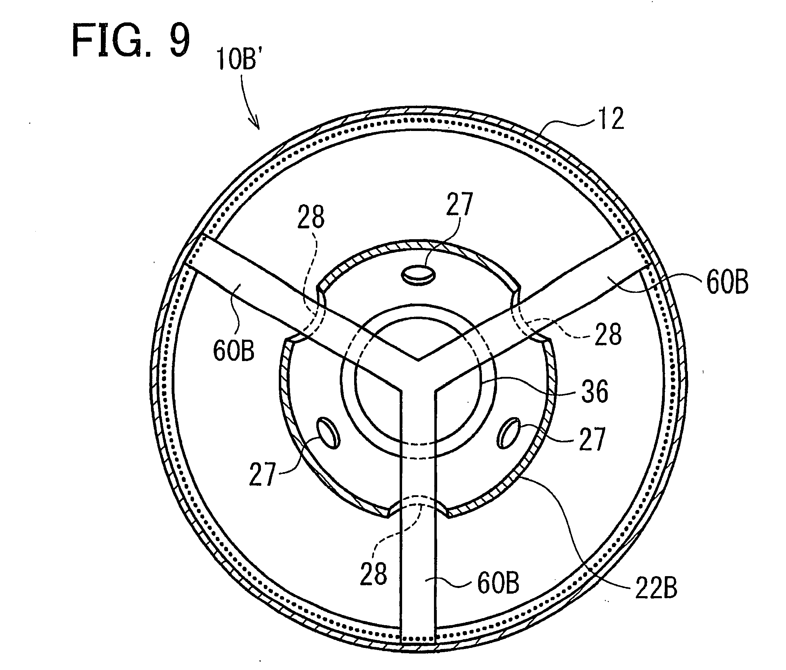

While the tether belt 60B of this embodiment crosses the airbag 10B at right angles into the shape of a cross (four-way shape), the shape of the tether belt is not limited to that. For example, the tether belt 60B may be like a straight line that crosses the airbag 10B in only one direction, or alternatively, may be of a three-way shape, like an airbag 10B' of Fig. 9, or a five-way shape.

Alternatively, a plurality of tether belts may cross the airbag.

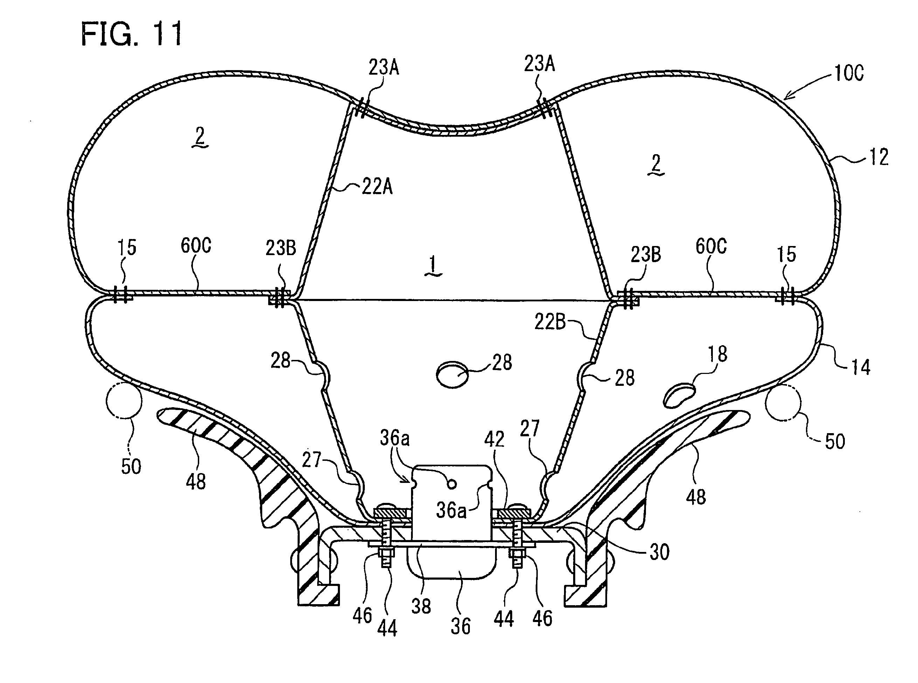

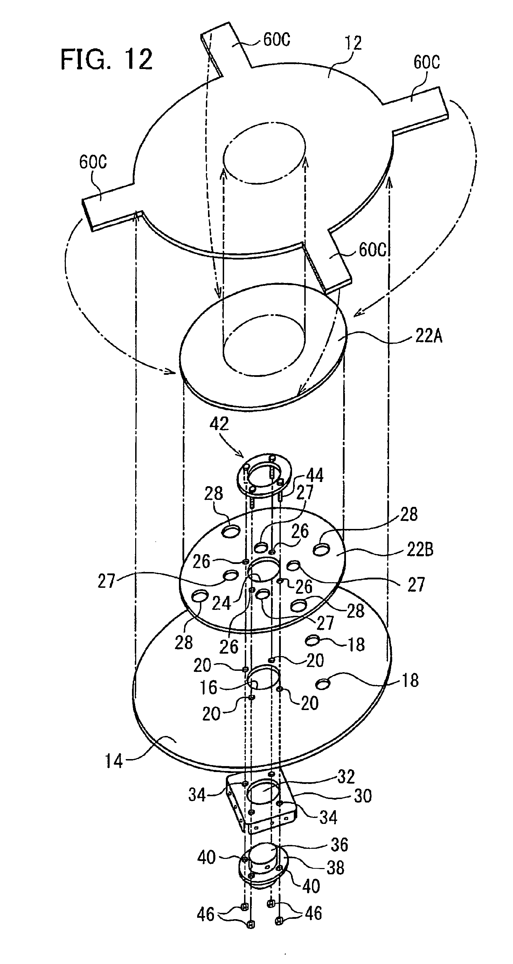

Fig. 11 is a cross sectional view of an airbag and an airbag apparatus according to another embodiment. Fig. 12 is an exploded perspective view of the airbag and the airbag apparatus.

An airbag 10C of this embodiment includes tether belts 60C connecting to the front panel 12 in place of the tether belts 60 connecting to the first inner panel 22 of the embodiment of Figs. 1, 2, and 10. The tether belts 60C join the periphery of the front panel 12 (and the rear panel 14) and the periphery of the first inner panel 22A (and the second inner panel 22B).

More specifically, in this embodiment, four tether belts 60C extend from the periphery of the front panel 12, as shown in Fig. 12. The tether belts 60C are disposed substantially at regular intervals around the circumference of the front panel 12.

As shown in Fig. 11, the tether belts 60C are oriented to the center of the airbag 10C, whose ends are placed on the seam of the peripheries of the first and second inner panel 22A and 22B, and stitched up with a seam 23B. The method and position of the connection of the ends of the tether belts 60C are not limited to that; for example, the tether belts 60C may be connected to positions other than the peripheries of the first and second inner panel 22A and 22B.

Also in this embodiment, the total of the radius of the first inner panel 22A and the length of the tether belts 60C extending from the outer periphery of the front panel 12 is set smaller than the radius of the front panel 12 so that the side periphery of the airbag 10C is drawn to the center of the airbag 10C when the airbag 10C inflates.

Also in this embodiment, the tether belts 60C are disposed so as to extend in the direction of the radius of the airbag 10C when the airbag 10C inflates, and connect the portions of the peripheries of the inner panels 22A and 22B and the portions of the peripheries of the front panel 12 and the rear panel 14 which are located in the same direction relative to the center of the airbag 10C (opposing portions in the direction of the radius of the airbag 10C).

The first inner panel 22A of this embodiment has a structure in which the tether belts 60 are eliminated from that of the embodiment of Figs. 1, 2, and 10.

The other structure of this embodiment is the same as that of the embodiment of Figs. 1, 2, and 10.

Also in this airbag 10C, the side periphery of the airbag 10C connects to the inner panel 22A and 22B in the center of the airbag 10C with the tether belts 60C. This structure prevents the airbag 10C from expanding sideward when an occupant strikes against the inflated airbag 10C.

The tether belts 60C of the airbag 10C are also integrally connected to the front panel 12. This structure therefore needs smaller number of man-hours than that using a separate tether belt, thus facilitating manufacture.

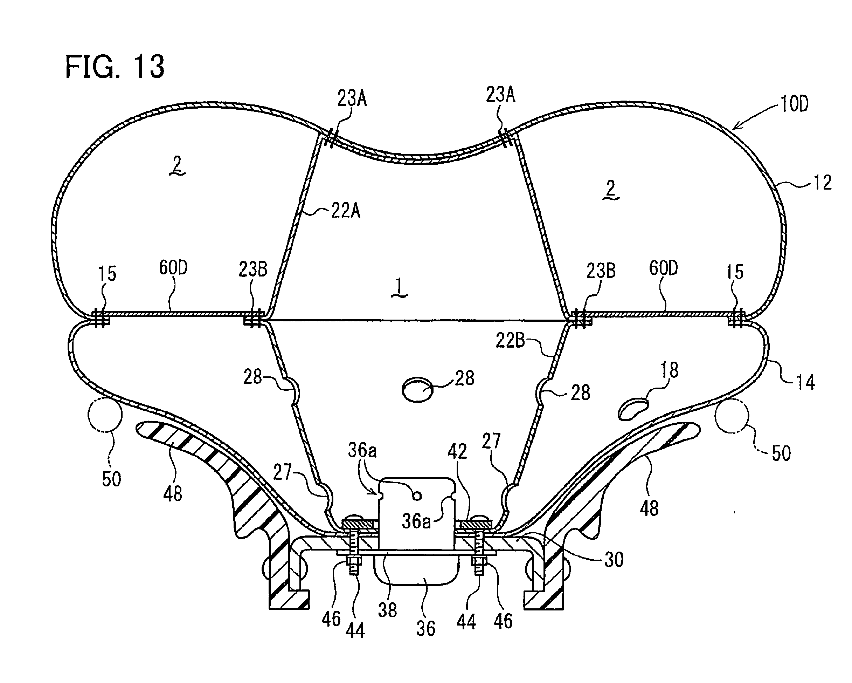

Fig. 13 is a cross sectional view of an airbag and an airbag apparatus according to another embodiment.

An airbag 10D of this embodiment includes tether belts 60D separate from the panels 12, 14, 22A, and 22B in place of the tether belts 60 connecting to the first inner panel 22A of the embodiment of Figs. 1, 2, and 10 or the tether belts 60C connecting to the front panel 12 of the embodiment of Figs. 11 and 12. The tether belts 60D connect the peripheries of the front panel 12 and the rear panel 14 and the peripheries of the first and second inner panel 22A and 22B, respectively.

More specifically, in this embodiment, a plurality of the tether belts 60D separate from the panels 12, 14, 22A, and 22B (although two tethers are shown in Fig. 13, three or more are possible) is disposed in the second chamber 2 of the airbag 10D so as to cross across the radius of the airbag 10D. The tether belts 60D are disposed substantially at regular intervals around the circumference of the airbag 10D.

One end of each tether belt 60D is placed on the portion where the peripheries of the front panel 12 and the rear panel 14 are joined, and stitched up with a seam 15. The other end of each tether belt 60D is placed on the portion where the peripheries of the first and second inner panel 22A and 22B are joined, and stitched up with a seam 23B. Alternatively, the peripheries of the front inner panel 12 and/or the rear panel 14 and the peripheries of the first inner panel 22A and/or the second inner panel 22B may each have an ear-like projection, onto which the both ends of the tether belts 60D may be sewn, respectively.

Also in this embodiment, the total of the radius of the first inner panel 22A and the length of each tether belt 60D is set smaller than the radius of the front panel 12 so that the side periphery of the airbag 10D is drawn to the center of the airbag 100 when the airbag 10D inflates.

Also in this embodiment, the tether belts 60D connect the portions of the peripheries of the inner panels 22A and 22B and the portions of the peripheries of the front panel 12 and the rear panel 14 which are located in the same direction relative to the center of the airbag 10D (opposing portions in the direction of the radius of the airbag 10D).

The other structure of this embodiment is the same as that of the embodiment of Figs. 1, 2, and 10.

Also in this airbag 10D, the side periphery of the airbag 10D connects to the inner panel 22A and 22B in the center of the airbag 10D with the tether belts 60D. This structure prevents the airbag 10D from expanding sideward when an occupant strikes against the inflated airbag 10D.

In this embodiment, the both ends of the tether belts 60D connect to the peripheries of the inner panel 22A and 22B and the peripheries of the front panel 12 and the rear panel 14, respectively. However, the connecting positions at the both ends of the tether belts 60D are not limited to those, but the tether belts 60D may connect to positions closer to the center relative to the peripheries of the panels 12, 14, 22A, and 22B.

The airbag 10D thus has a high degree of flexibility in arranging the tether belts 60D because the tether belts 60D are separate from the panels 12, 14, 22A, and 22B.

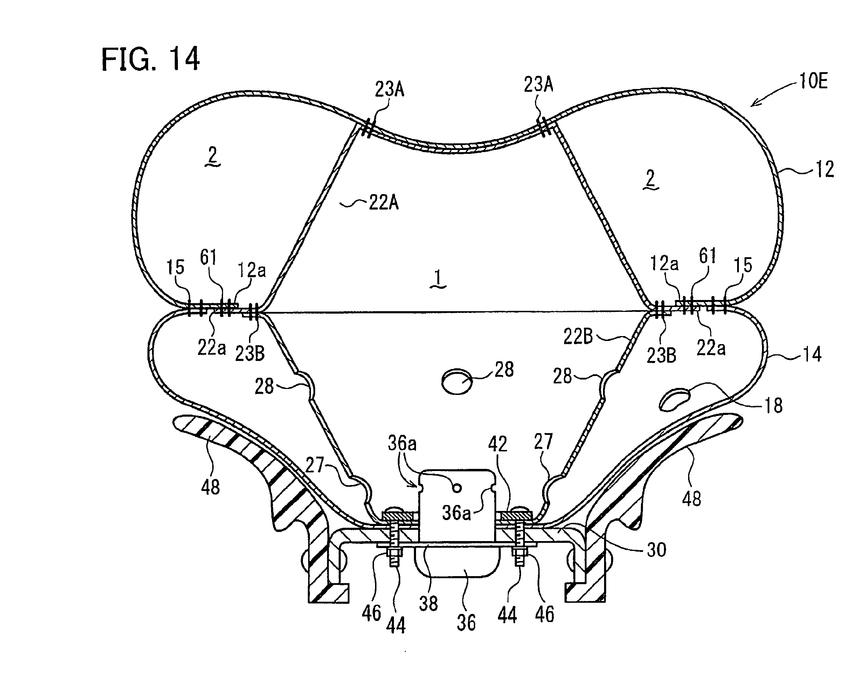

Fig. 14 is a cross sectional view of an airbag and an airbag apparatus according to another embodiment.

An airbag 10E of this embodiment has a connecting piece 22a extending from the first inner panel 22A and a connecting piece 12a extending from the front panel 12 in place of the tether belts 60 extending from the first inner panel 22A of the embodiment of Figs. 1, 2, and 10 or the tether belts 60C extending from the front panel 12 of the embodiment of Figs. 11 and 12. The connecting pieces 22a and 12a are joined together to thereby connect the periphery of the front panel 12 (and the rear panel 14) and the periphery of the first inner panel 22A (and the second inner panel 22B) to each other.

Specifically, in this embodiment, a plurality of the connecting pieces 22a and 12a (two each in Fig. 14, however, three or more is possible) projects from the periphery of the first inner panel 22A and the periphery of the front panel 12, respectively. The connecting pieces 22a and 12a are located in the position at which they are opposed to each other in the direction of the radius of the airbag 10E when the airbag 10E inflates.

The distal ends of the connecting pieces 22a and 12a that face each other in the direction of the radius of the airbag 10E are placed one on another and stitched up with a seam 61.

As shown in the figure, the connecting pieces 22a and 12a of this embodiment are ear-like small pieces projecting from the outer peripheries of the first inner panel 22A and the front panel 12. The connecting pieces 22a and 12a are stitched together with the seam 61 to thereby connect the peripheries of the first inner panel 22A and the front panel 12 substantially directly. Alternatively, at least one of the connecting pieces 22a and 12a may be shaped like a belt, and both may be joined as if the peripheries of the first inner panel 22A and the front panel 12 are joined via a tether belt.

The other structure of this embodiment is the same as that of the embodiment of Figs. 1, 2, and 10.

Also in the case of the airbag 10E, the side periphery of the airbag 10E connect to the inner panels 22A and 22B in the center of the airbag 10E with the connecting pieces 22a and 12a. This structure prevents the airbag 10E from expanding sideward when an occupant strikes against the inflated airbag 10E.

In this embodiment, the projecting piece 22a projects from the first inner panel 22A; however, the projecting piece may project from the second inner panel 22B, or alternatively, two projecting pieces may project from both of the first inner panel 22A and the second inner panel 22B. The other connecting piece 12a may not project from the front panel 12, but may project from the rear panel 14, or alternatively, two connecting pieces may project from both of the front panel 12 and the rear panel 14.

The above-described embodiments are merely examples of the invention; the invention is not limited to the embodiments.

## Claims

1. An airbag inflated with gas from a gas generator (36), the airbag (10; 10A) comprising:
a front panel (12) disposed on the occupant side and a rear panel (14) disposed opposite to the occupant, the peripheries of the front panel (12) and the rear panel (14) being connected with each other,
the rear panel (14) having an opening (16) for the gas generator (36) in the center; and
an inner panel for partitioning the interior of the airbag (10; 10A) into a central first chamber (1) and a second chamber (2) enclosing the first chamber (1),
the inner panel having a communication portion (27, 28) that communicates the first chamber (1) and the second chamber (2) with each other,
the gas from the gas generator (36) flowing from the first chamber (1) through the communication portion (27, 28) into the second chamber (2); wherein
the inner panel includes a first inner panel (22A) adjacent to the front panel (12) and a second inner panel (22B) adjacent to the rear panel (14);
the rear end of the first inner panel (22A) connects to the front end of the second inner panel (22B); and
a tether belt (60; 60A) extending integrally from at least one of the first inner panel (22A) and the second inner panel (22B) connects to the side periphery of the airbag (10; 10A).

2. The airbag according to Claim 1, wherein
the tether belt (60A) extends from the first inner panel (22A); and
the tether belt (60A) extends through the first chamber (1) and the communicating portion (28) to the opposite second chamber (2), with the first chamber (1) therebetween.

3. An airbag inflated with gas from a gas generator (36), the airbag (10B; 10B') comprising:
a front panel (12) disposed on the occupant side and a rear panel (14) disposed opposite to the occupant, the peripheries of the front panel (12) and the rear panel (14) being connected with each other,
the rear panel (14) having an opening (16) for the gas generator (36) in the center; and
an inner panel (22A',22B) for partitioning the interior of the airbag (10B; 10B') into a central first chamber (1) and a second chamber (2) enclosing the first chamber (1),
the inner panel (22A', 22B) having a communication portion (27, 28) that communicates the first chamber (1) and the second chamber (2) with each other,
the gas from the gas generator (36) flowing from the first chamber (1) through the communication portion (27, 28) into the second chamber (2); wherein
a tether belt (60B; 60B') extending from one side peripheral portion of the airbag (10B; 10B') through the communicating portion (28) to the other side peripheral portion, both ends of the tether belt (60B; 60B') connecting to the side peripheral portions of the airbag (10B; 10B').

4. An airbag inflated with gas from a gas generator, the airbag (10C) comprising:
a front panel (12) disposed on the occupant side and a rear panel (14) disposed opposite to the occupant, the peripheries of the front panel (12) and the rear panel (14) being connected with each other,
the rear panel (14) having an opening (16) for the gas generator (36) in the center; and
an inner panel (22A, 22B) for partitioning the interior of the airbag (10C) into a central first chamber (1) and a second chamber (2) enclosing the first chamber (1),
the inner panel (22A, 22B) having a communication portion (27, 28) that communicates the first chamber (1) and the second chamber (2) with each other,
the gas from the gas generator (36) flowing from the first chamber (1) through the communication portion (27, 28) into the second chamber (2); wherein
a tether belt (60C) extending from at least one of the front panel (12) and the rear panel (14) connects to the inner panel (22A, 22B).

5. An airbag inflated with gas from a gas generator, the airbag (10E) comprising:
a front panel (12) disposed on the occupant side and a rear panel (14) disposed opposite to the occupant, the peripheries of the front panel (12) and the rear panel (14) being connected with each other,
the rear panel (14) having an opening (16) for the gas generator (36) in the center; and
an inner panel for partitioning the interior of the airbag (10E) into a central first chamber (1) and a second chamber (2) enclosing the first chamber (1),
the inner panel having a communication portion (27, 28) that communicates the first chamber (1) and the second chamber (2) with each other,
the gas from the gas generator (36) flowing from the first chamber (1) through the communication portion (27, 28) into the second chamber (2); wherein
the inner panel includes a first inner panel (22A) on the front panel (12) side and a second inner panel (22B) on the rear panel (14) side;
the rear end of the first inner panel (22A) connects to the front end of the second inner panel (22B); and
a connecting piece (22a) extending from at least one of the first inner panel (22A) and the second inner panel (22B) and a connecting piece (12a) extending from at least one of the front panel (12) and the rear panel (14) connect to each other.

6. An airbag inflated with gas from a gas generator, the airbag (10D) comprising:
a front panel (12) disposed on the occupant side and a rear panel (14) disposed opposite to the occupant, the peripheries of the front panel (12) and the rear panel (14) being connected with each other,
the rear panel (14) having an opening (16) for the gas generator (36) in the center; and
an inner panel (22A, 22B) for partitioning the interior of the airbag (10D) into a central first chamber (1) and a second chamber (2) enclosing the first chamber (1),
the inner panel (22A, 22B) having a communication portion (27, 28) that communicates the first chamber (1) and the second chamber (2) with each other,
the gas from the gas generator (36) flowing from the first chamber (1) through the communication portion (27, 28) into the second chamber (2); wherein
the inner panel (22A, 22B) and the side periphery of the airbag (10D) are connected with a tether belt (60D) separate from the inner panel (22A, 22B), the front panel (12), and the rear panel (14).

7. An airbag apparatus comprising an airbag (10; 10A-E) and a gas generator (36), wherein
the airbag (10; 10A-E) is the airbag according to one of Claims 1 to 6.

## Patentansprüche

1. Airbag, welcher mit Gas von einem Gasgenerator (36) aufgeblasen wird, wobei der Airbag (10; 10A) umfasst:
eine vordere Stoffbahn (12), welche auf der Insassenseite angeordnet ist, und eine hintere Stoffbahn (14), welche dem Insassen abgewandt angeordnet ist, wobei die Umfänge der vorderen Stoffbahn (12) und der hinteren Stoffbahn (14) miteinander verbunden sind,
wobei die hintere Stoffbahn (14) in der Mitte eine Öffnung (16) für den Gasgenerator (36) aufweist; und
eine innere Stoffbahn, um das Innere des Airbags (10; 10A) in eine mittige erste Kammer (1) und eine zweite Kammer (2), welche die erste Kammer (1) umgibt, aufzuteilen,
wobei die innere Stoffbahn einen Verbindungsabschnitt (27, 28) aufweist, welcher die erste Kammer (1) und die zweite Kammer (2) miteinander verbindet,
wobei das Gas von dem Gasgenerator (36) von der ersten Kammer (1) durch den Verbindungsabschnitt (27, 28) in die zweite Kammer (2) strömt;
wobei die innere Stoffbahn eine erste innere Stoffbahn (22A) benachbart zu der vorderen Stoffbahn (12) und eine zweite innere Stoffbahn (22B) benachbart zu der hinteren Stoffbahn (14) aufweist;
wobei das hintere Ende der ersten inneren Stoffbahn (22A) mit dem vorderen Ende der zweiten inneren Stoffbahn (23B) verbunden ist; und
wobei ein Haltegurt (60; 60A), welcher sich ganzheitlich von der ersten inneren Stoffbahn (22A) und/oder der zweiten inneren Stoffbahn (23B) erstreckt, mit dem seitlichen Umfang des Airbags (10; 10A) verbunden ist.

2. Airbag nach Anspruch 1,
**dadurch gekennzeichnet,**
**dass** sich der Haltegurt (60A) von der ersten inneren Stoffbahn (22A) erstreckt; und
**dass** sich der Haltegurt (60A) durch die erste Kammer (1) und den Verbindungsabschnitt (28) zu der gegenüberliegenden zweiten Kammer (2) erstreckt, wobei die erste Kammer (1) dort dazwischen angeordnet ist.

3. Airbag, welcher mit Gas von einem Gasgenerator (36) aufgeblasen wird, wobei der Airbag (10B; 10B') umfasst:
eine vordere Stoffbahn (12), welche auf der Insassenseite angeordnet ist, und eine hintere Stoffbahn (14), welche dem Insassen abgewandt angeordnet ist, wobei die Umfänge der vorderen Stoffbahn (12) und der hinteren Stoffbahn (14) miteinander verbunden sind,
wobei die hintere Stoffbahn (14) in der Mitte eine Öffnung (16) für den Gasgenerator (36) aufweist; und
eine innere Stoffbahn (22A', 22B), um das Innere des Airbags (10B; 10B') in eine mittige erste Kammer (1) und eine zweite Kammer (2), welche die erste Kammer (1) umgibt, aufzuteilen,
wobei die innere Stoffbahn (22A', 22B) einen Verbindungsabschnitt (27, 28) aufweist, welcher die erste Kammer (1) und die zweite Kammer (2) miteinander verbindet,
wobei das Gas von dem Gasgenerator (36) von der ersten Kammer (1) durch den Verbindungsabschnitt (27, 28) in die zweite Kammer (2) strömt;
wobei sich ein Haltegurt (60B; 60B') von einem Seitenumfangsabschnitt des Airbags (10B; 10B') durch den Verbindungsabschnitt (28) zu dem anderen Seitenumfangsabschnitt erstreckt, wobei beide Enden des Haltegurts (60B; 60B') mit den Seitenumfangsabschnitten des Airbags (10B; 10B') verbunden sind.

4. Airbag, welcher mit Gas von einem Gasgenerator aufgeblasen wird, wobei der Airbag (10C) umfasst:
eine vordere Stoffbahn (12), welche auf der Insassenseite angeordnet ist, und eine hintere Stoffbahn (14), welche dem Insassen abgewandt angeordnet ist, wobei die Umfänge der vorderen Stoffbahn (12) und der hinteren Stoffbahn (14) miteinander verbunden sind,
wobei die hintere Stoffbahn (14) in der Mitte eine Öffnung (16) für den Gasgenerator (36) aufweist; und
eine innere Stoffbahn (22A, 22B), um das Innere des Airbags (10C) in eine mittige erste Kammer (1) und eine zweite Kammer (2), welche die erste Kammer (1) umgibt, aufzuteilen,
wobei die innere Stoffbahn (22A; 22B) einen Verbindungsabschnitt (27, 28) aufweist, welcher die erste Kammer (1) und die zweite Kammer (2) miteinander verbindet,
wobei das Gas von dem Gasgenerator (36) von der ersten Kammer (1) durch den Verbindungsabschnitt (27, 28) in die zweite Kammer (2) strömt;
wobei ein Haltegurt (60C), welcher sich von der vorderen Stoffbahn (12) und/oder der hinteren Stoffbahn (14) erstreckt, mit der inneren Stoffbahn (22A, 22B) verbunden ist.

5. Airbag, welcher mit Gas von einem Gasgenerator aufgeblasen wird, wobei der Airbag (10E) umfasst:
eine vordere Stoffbahn (12), welche auf der Insassenseite angeordnet ist, und eine hintere Stoffbahn (14), welche dem Insassen abgewandt angeordnet ist, wobei die Umfänge der vorderen Stoffbahn (12) und der hinteren Stoffbahn (14) miteinander verbunden sind,
wobei die hintere Stoffbahn (14) in der Mitte eine Öffnung (16) für den Gasgenerator (36) aufweist; und
eine innere Stoffbahn, um das Innere des Airbags (10E) in eine mittige erste Kammer (1) und eine zweite Kammer (2), welche die erste Kammer (1) umgibt, aufzuteilen,
wobei die innere Stoffbahn einen Verbindungsabschnitt (27, 28) aufweist, welcher die erste Kammer (1) und die zweite Kammer (2) miteinander verbindet,
wobei das Gas von dem Gasgenerator (36) von der ersten Kammer (1) durch den Verbindungsabschnitt (27, 28) in die zweite Kammer (2) strömt;
wobei die innere Stoffbahn eine erste innere Stoffbahn (22A) auf einer Seite der vorderen Stoffbahn (12) und eine zweite innere Stoffbahn (22B) auf einer Seite der hinteren Stoffbahn (14) aufweist;
wobei das hintere Ende der ersten inneren Stoffbahn (22A) mit dem vorderen Ende der zweiten inneren Stoffbahn (22B) verbunden ist; und
wobei ein Verbindungsstück (22a), welches sich von der ersten inneren Stoffbahn (22A) und/oder der zweiten inneren Stoffbahn (22B) erstreckt, und ein Verbindungsstück (12a), welches sich von der vorderen Stoffbahn (12) und/oder der hinteren Stoffbahn (14) erstreckt, miteinander verbunden sind.

6. Airbag, welcher mit Gas von einem Gasgenerator aufgeblasen wird, wobei der Airbag (10D) umfasst:
eine vordere Stoffbahn (12), welche auf der Insassenseite angeordnet ist, und eine hintere Stoffbahn (14), welche dem Insassen abgewandt angeordnet ist, wobei die Umfänge der vorderen Stoffbahn (12) und der hinteren Stoffbahn (14) miteinander verbunden sind,
wobei die hintere Stoffbahn (14) in der Mitte eine Öffnung (16) für den Gasgenerator (36) aufweist; und
eine innere Stoffbahn (22A, 22B), um das Innere des Airbags (10D) in eine mittige erste Kammer (1) und eine zweite Kammer (2), welche die erste Kammer (1) umgibt, aufzuteilen,
wobei die innere Stoffbahn (22A, 22B) einen Verbindungsabschnitt (27, 28) aufweist, welcher die erste Kammer (1) und die zweite Kammer (2) miteinander verbindet,
wobei das Gas von dem Gasgenerator (36) von der ersten Kammer (1) durch den Verbindungsabschnitt (27, 28) in die zweite Kammer (2) strömt;
wobei die innere Stoffbahn (22A, 22B) und der Seitenumfang des Airbags (10D) mit einem Haltegurt (60D) getrennt von der inneren Stoffbahn (22A, 23B), der vorderen Stoffbahn (12) und der hinteren Stoffbahn (14) verbunden sind.

7. Airbagvorrichtung umfassend einen Airbag (10; 10A-E) und einen Gasgenerator (36),
**dadurch gekennzeichnet,**
**dass** der Airbag (10; 10A-E) der Airbag nach einem der Ansprüche 1 bis 6 ist.

## Revendications

1. Un coussin gonflable de protection gonflé avec du gaz provenant d'un générateur de gaz (36), le coussin gonflable (10 ; 10A) comprenant :
un panneau avant(12) disposé du côté de l'occupant, et un panneau arrière (14) disposé à l'opposé de l'occupant, les périphéries du panneau avant (12) et du panneau arrière (14) étant raccordées l'une à l'autre,
le panneau arrière (14) comportant une ouverture (16) pour le générateur de gaz (36), au centre ; et
un panneau interne pour cloisonner l'intérieur du coussin gonflable (10 ; 10A) en une première chambre (1) centrale et une deuxième chambre (2) entourant la première chambre (1),
le panneau interne comportant une partie de communication (27, 28), qui fait communiquer la première chambre (1) et la deuxième chambre (2) l'une avec l'autre,
le gaz provenant du générateur de gaz (36), s'écoulant de la première chambre (1) à la deuxième chambre (2) via la partie de communication (27, 28) ; dans lequel
le panneau interne inclut un premier panneau interne (22A) adjacent au panneau avant (12) et un deuxième panneau interne (22B) adjacent au panneau arrière (14) ;
l'extrémité arrière du premier panneau interne (22A) est raccordée à l'extrémité avant du deuxième panneau interne (22B) ; et
une courroie de retenue (60 ; 60A), s'étendant de façon intégrée depuis l'un au moins du premier panneau interne (22A) et du deuxième panneau interne (22B), est raccordée à la périphérie latérale du coussin gonflable (10 ; 10A).

2. Le coussin gonflable selon la revendication 1, dans lequel
la courroie de retenue (60A) s'étend depuis le premier panneau interne (22A) ; et
la courroie de retenue (60A) s'étend, via la première chambre (1) et la partie de communication (28), jusqu'à la deuxième chambre (2) opposée, avec la première chambre (1) entre elles.

3. Un coussin gonflable gonflé avec du gaz provenant d'un générateur de gaz (36), le coussin gonflable (10B ; 10B) comprenant :
un panneau avant (12) disposé du côté de l'occupant, et un panneau arrière (14) de l'occupant, les périphéries du panneau avant (12) et du panneau arrière (14) étant raccordées l'une à l'autre,
le panneau arrière (14) comportant une ouverture (16) pour le générateur de gaz (36), au centre ; et
un panneau interne (22A , 22B) pour cloisonner l'intérieur du coussin gonflable (10B ; 10B) en une première chambre (1) centrale et une deuxième chambre (2) entourant la première chambre (1),
le panneau interne (22A , 22B) comportant une partie de communication (27, 28), qui fait communiquer la première chambre (1) et la deuxième chambre (2) l'une avec l'autre,
le gaz provenant du générateur de gaz (36), s'écoulant de la première chambre (1) à la deuxième chambre (2) via la partie de communication (27, 28); dans lequel
une courroie de retenue (60B ; 60B) s'étendant d'une partie périphérique latérale du coussin gonflable (10B ; 10B) à l'autre partie périphérique latérale via la partie de communication (28), les deux extrémités de la courroie de retenue (60B ; 60B) étant raccordées aux parties périphériques latérales du coussin gonflable (10B ; 10B).

4. Un coussin gonflable gonflé avec du gaz provenant d'un générateur de gaz, le coussin gonflable (10C) comprenant :
un panneau avant (12) disposé du côté de l'occupant, et un panneau arrière (14) disposé à l'opposé de l'occupant, les périphéries du panneau avant (12) et du panneau arrière (14) étant raccordées l'une à l'autre,
le panneau arrière (14) comportant une ouverture (16) pour le générateur de gaz (36), au centre ; et
un panneau interne (22A, 22B) pour cloisonner l'intérieur du coussin gonflable (10C) en une première chambre (1) centrale et une deuxième chambre (2) entourant la première chambre (1),
le panneau interne (22A, 22B) comportant une partie de communication (27, 28) qui fait communiquer la première chambre (1) et la deuxième chambre (2) l'une avec l'autre,
le gaz provenant du générateur de gaz (36), s'écoulant de la première chambre (1) à la deuxième chambre (2) via la partie de communication (27, 28) ; dans lequel
une courroie de retenue (60C), s'étendant depuis l'un au moins du panneau avant (12) et du panneau arrière (14), est raccordée au panneau interne (22A, 22B).

5. Un coussin gonflable gonflé avec du gaz provenant d'un générateur de gaz, le coussin gonflable (10E) comprenant :
un panneau avant (12) disposé du côté de l'occupant, et un panneau arrière (14) disposé à l'opposé de l'occupant, les périphéries du panneau avant (12) et du panneau arrière (14) étant raccordées l'une à l'autre,
le panneau arrière (14) comportant une ouverture (16) pour le générateur de gaz (36), au centre ; et
un panneau interne pour cloisonner l'intérieur du coussin gonflable (10E) en une première chambre (1) centrale et une deuxième chambre (2) entourant la première chambre (1),
le panneau interne comportant une partie de communication (27, 28), qui fait communiquer la première chambre (1) et la deuxième chambre (2) l'une avec l'autre,
le gaz provenant du générateur de gaz (36), s'écoulant de la première chambre (1) à la deuxième chambre (2) via la partie de communication (27, 28); dans lequel
le panneau interne inclut un premier panneau interne (22A) sur le côté du panneau avant (12) et un deuxième panneau interne (22B) sur le côté du panneau arrière (14) ;
l'extrémité arrière du premier panneau interne (22A) est raccordée à l'extrémité avant du deuxième panneau interne (22B) ; et
une pièce de raccordement (22a), s'étendant depuis l'un au moins du premier panneau interne (22A) et du deuxième panneau interne (22B), et une pièce de raccordement (12a), s'étendant depuis l'un au moins du panneau avant (12) et du panneau arrière (14), sont raccordées l'une à l'autre.

6. Un coussin gonflable gonflé avec du gaz provenant d'un générateur de gaz, le coussin gonflable (10D) comprenant :
un panneau avant (12) disposé du côté de l'occupant, et un panneau arrière (14) disposé à l'opposé de l'occupant, les périphéries du panneau avant (12) et du panneau arrière (14) étant raccordées l'une à l'autre,
le panneau arrière (14) comportant une ouverture (16) pour le générateur de gaz (36), au centre ; et
un panneau interne (22A, 22B) pour cloisonner l'intérieur du coussin gonflable (10D) en une première chambre (1) centrale et une deuxième chambre (2) entourant la première chambre (1),
le panneau interne (22A, 22B) comportant une partie de communication (27, 28) qui fait communiquer la première chambre (1) et la deuxième chambre (2) l'une avec l'autre,
le gaz provenant du générateur de gaz (36), s'écoulant de la première chambre (1) à la deuxième chambre (2) via la partie de communication (27, 28) ; dans lequel
le panneau interne (22A, 22B) et la périphérie latérale du coussin gonflable (10D) sont raccordés avec une courroie de retenue (60D) séparée du panneau interne (22A, 22B), du panneau avant (12) et du panneau arrière (14).

7. Un dispositif de coussin gonflable, comprenant un coussin gonflable (10 ; 10A-E) et un générateur de gaz (36), dans lequel
le coussin gonflable (10 ; 10A-E) est le coussin gonflable selon l'une des revendications 1 à 6.
